# EUROPEAN PATENT SPECIFICATION

(11) **EP 2 010 468 B1**
(45) Date of publication and mention of the grant of the patent: **16.05.2012**
(21) Application number: 07727301.9
(22) Date of filing: 23.03.2007
(51) Int. Cl.: C04B 41/63, C04B 41/71

(54) **METHOD FOR MANUFACTURING CONGLOMERATE STONE ARTICLES WITH A SYNTHETIC RESIN SURFACE COATING**
VERFAHREN ZUR HERSTELLUNG VON KONGLOMERATSTEINARTIKELN MIT EINEM KUNSTHARZ-OBERFLÄCHENÜBERZUG
PROCEDE DE FABRICATION D'ARTICLES EN PIERRE CONGLOMEREE COMPORTANT UN REVETEMENT DE SURFACE EN RESINE SYNTHETIQUE

(30) Priority: 04.04.2006 IT TV20060059
(43) Date of publication of application: 07.01.2009
(73) Proprietor: Toncelli, Luca, 36061 Bassano del Grappa (Vicenza) (IT)
(72) Inventor: Toncelli, Luca, 36061 Bassano del Grappa (Vicenza) (IT)
(74) Representative: Dragotti, Gianfranco
(86) International application number: PCT/EP2007/052827
(87) International publication number: WO 2007/113148

(56) References cited:
- JP-A- 4 219 174
- JP-A- 4 279 091

## Description

The present invention relates to a method for coating the surfaces of articles made of composite stone material and more specifically to an improvement in the methods for manufacturing articles in the form of conglomerate stone slabs making use of a resin as binder and provided with a protective and/or decorative surface coating consisting of a synthetic resin.

A typical example of this type of article consists of the slabs which are known by the trade name of "Bretonstone" and are made with a special technology using granulated stone materials bonded with a synthetic resin, such as, for example, an epoxy resin or preferably a polyester resin. In the remainder of this specification, the wording "conglomerate stone material" is understood as meaning this type of material.

The "Bretonstone" technology is the subject of various patents and patents applications including, among those more recently published : WO-A-2005 030474 and WO-A-2005 014952.

These articles may be and actually are produced in the form of slabs of large dimensions (3.0 x 1.6 metres) which can be used in some cases as such and in some cases, after being cut into panels of smaller dimensions, for various applications such as cladding for internal or external walls of buildings, internal and external flooring and furnishing articles, such as so-called worktops for example of the kitchens.

In many cases one of the surfaces is coated with a protective layer of synthetic resin; usually, in order to improve the adhesion of the protective layer, a primer is applied beforehand onto the surface to be coated.

A typical example is that of slabs for external cladding which are subject to the action of adverse weather conditions and in particular to the action of ultraviolet (UV) rays which may cause yellowing of the surface layer of polyester resin comprised in the slab with a consequent deterioration in the colour properties of the article. In order to prevent this deterioration, coatings based on acrylic resins, which are in the event reinforced with a hard mineral powder in order to impart anti-scratch properties and contain in their composition filters able to block the UV radiation, are usually applied onto the surface of the slabs.

In this way it is possible to achieve the desired result, but some drawbacks remain.

Firstly, if the coated slab is cut, for example so as to be divided into panels of a smaller size or into tiles, the adhesion of the acrylic resin to the surface of the slab is not sufficiently resistant so that, under the action of the cutting tool, the layer of resin is partly detached from the surface and the cutting lines, instead of being clean, are irregular or show rough edges.

This results in the need for further machining in order to finish the edges of the panels or tiles and eliminate the abovementioned irregularities or rough edges of the coating.

Secondly, again as a result of the insufficent adhesion of the resin coating to the surface of the slab, localized flakings of the resin layer from the surface may occur at the corners of the panels and result in the infiltration of foreign elements, in particular water, into this zones.

As is well known in the case of materials used for the external cladding of buildings, the presence of water, especially if it has penetrated through the cracks in the cladding, may cause damage due to the fluctuations of the ambient temperature, particularly when there are night-time frosts followed by day-time thawings.

There also exist other examples of coatings for conglomerate slabs where it is important to ensure that an adhesion as strong as possible to the surface of the slab, such as for example when a coating consisting of an aqueous solution of quaternary ammonium salt bonded to a silane is applied onto the surface of the Bretonstone slab to provide a bactericidal property. ,

The slabs of conglomerate material are also provided with a coating when, for example, it is required to impart a dirt-resistant property and have the possibility of subsequently cleaning the surface, for example after it has been covered with graffiti in acts of vandalism. The main object of the present invention is to eliminate substantially the problems and drawbacks briefly described above in an industrially advantageous manner.

These and other objects are achieved by a method for manufacturing conglomerate stone articles, which are provided with a protective and/or decorative surface coating consisting of synthetic resin, characterized in that, prior to application of the coating, the surface to be coated is subjected to a Corona discharge treatment.

It has in fact been assessed that in this way the coating subsequently applied to the treated surface is no longer affected by the above mentioned problems and drawbacks.

As it is known, the Corona discharge treatment consists in causing an electric discharge without generating an electric arc between an electrode and a counterelectrode, said discharge being characterized by high voltage and high electrical insulation between the two electrodes.

The electric discharge creates a flow of highly ionised air which produces the polarization of the surface molecules at the surface which is subjected to the treatment

Hitherto the Corona discharge treatment was and is currently used in the processing of plastic materials, in particular polyolefins, both in the form of thin films and in the form of three-dimensional objects, prior to printing, painting and gluing treatments making use of liquids.

An example of the known uses of the Corona discharge treatment is disclosed in the patent application JP-A-4 279 091.

It was in fact previously found that with these materials poor painting, printing and gluing results were obtained and that this problem depended on the difference in "wettability" of their surfaces.

It also was and is well known that the wettability of a material depends on the surface tension which is lower than that of the liquid to be received in the case of plastics and in particular of polyolefin materials.

The preliminary treatment of the surface by a Corona electric discharge produces a variation in the surface tension so that the surface tension of the material increases to a value which is higher than that of the liquid to be applied.

Obviously, in the case of plastics, the treatment was principally aimed at allowing good adhesion of liquids such as printing inks or paints or also glues, namely materials which are applied in layers with a very small thickness (of about a few microns).

On the other hand, it was not possible to foresee in any way that, in the case of slabs of conglomerate stone material, therefore comprising granules of a stone (such as marble, granite, quartz and the like) bonded with a synthetic resin, by this treatment it was possible to improve the adhesion of a synthetic resin coating, avoiding the problems and drawbacks of the prior art.

Therefore, according to another definition of the present invention, the method which forms the subject thereof consists in performing, prior to the application of the desired coating, a treatment able to increase the surface tension of the surfaces of the article made of conglomerate stone material in such way that the surface tension is higher than that of the material of which the coating to be subsequently applied is made.

It is also known that, in the case of plastics and in particular polyolefin materials, depending on whether they are in the form of thin foils or also three-dimensional objects, the modes of application of the Corona discharge are different and are referred to as Corona 2D and Corona 3D, respectively.

Moreover, both the types of treatment may be performed at low or high frequency.

The low frequency system can be used for small-size and slow-moving articles. The output voltage is about 7 kV and the output frequency 50 Hz.

The high-frequency system is the typical method for treating big-size objects and fast-moving articles. The output voltage at the electrodes is between 30 and 32 kV and the output frequency at the electrodes may reach 32 kHz.

Finally, it should be noted that the Corona discharge treatment does neither heat nor deform or opacify the articles.

In the case of the present invention the treatment of the article made of conglomerate stone material is the Corona 3D type of discharge.

As already mentioned above, the present invention is applicable to different types of articles which range from conglomerate articles with a surface coating consisting of a resin which is transparent and resistant to the action of UV rays to conglomerate articles provided with a surface coating containing a slow-release bactericidal substance and the like.

The above described method described for manufacturing articles made of conglomerate stone material provided with a protective and/or decorative surface coating consisting of synthetic resin, in which, prior to application of the said coating, the surface tension of the surfaces to be coated is increased to a value higher than that of the material forming the coating to be applied, in particular by means of a Corona discharge treatment, imparts to the treated articles superior technical characteristics if the protective coating, instead of being made with a conventional acrylic resin, consists of a fluoropolymer and in particular a fluorinated polyurethane resin preferably containing at least 25% fluorine and 15% chlorine, such as that commercially known as Lumiflon®, produced by Asahi Glass Company.

An article which is subjected to the Corona discharge treatment acquires exceptional properties, with a resistance to adverse weather conditions 4-5 times greater than that of articles coated with conventional acrylic resin primers and paints. The treatment described above imparts to the article:
- A superior barrier effect
- An intrinsic resistance to UV rays
- A superior resistance to acids, bases and solvents
- Oil and water repellence properties
- Dirt resistance, in particular resistance to graffiti of any type so that they may be repeatedly cleaned with removal agents
- Incomparable performance in marine and industrial environments
- High flexibility with exceptional resistance to intense cold
- A superior resistance to wear (useful life of several decades)

Fluoropolymers are typically known for their intrinsic resistance to ultraviolet radiation, superior resistance to chemical agents, including very aggressive agents such as nitric, sulphuric and hydrochloric acids, alkalis such as sodium carbonate and lime and to solvents.

These properties are precisely due to the presence of the fluorine within the polymers which contributes towards the notable stability of the polymer matrix and the surface barrier effect.

Since the fluoropolymers hitherto able to be used were advantageously those based only on polymers of fluoroolefins, typically polyvinyldene fluoride, which however require a high crosslinking temperature and do not show a particular remarkable adhesiveness to the substrates to be protected, they were difficult to use in architecture, apart from extreme cases.

The resins in question fluoropolymers of the last generation which, making use of the synthesis by means of polyaddition of fluoroolefins with hydrogenated monomers, offer optimum results in terms of performance for use precisely in the field of the protection of architectural structures. These resins have among their essential components: a base of a copolymer of chlorotrifluoroethylene with a hydrolysable functional group, typically a hydroxy group; a crosslinking agent, such as polyisocyanate; an acrylic or methacrylic polymer which acts as an adhesion component. The resins are normally dissolved in an organic solvent, typically an aromatic organic solvent.

The crosslinking process of these resins occurs at low temperatures, typically room temperature, but in order to accelerate this process, it is customary to perform heating up to a maximum of 50°C.

Since some materials have a surface with poor "wettability" properties their painting treatments cannot produce good results.

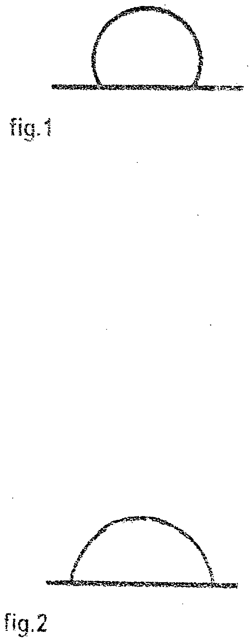

From a macroscopic point of view the materials with this behaviour have a surface tension which is lower than that of the liquid to be received. The droplets of liquid are arranged as shown in Fig. 1.

If the surface tension of the solid is increased until it exceeds that of the liquid, the droplets are retained by the surface and are arranged as shown in Fig. 2 since they actually wet the surface. In this way a good result is obtained in terms of adhesion.

The adhesion on a surface which has undergone Corona treatment is therefore of a chemical/physical nature due to the force of intermolecular attraction of the two materials.

Some examples of embodiment of the method according to the present invention which prove the technically advantageous results which can be achieved by the invention are given herebelow.

Tests were carried out on a Bretonstone slab composed of quartz granules and polyester resin as the binder and subjected to Coronadischarge treatment at a voltage of 30 kV and a frequency of 32 kHz, with a power of 8 kW.

After treatment, a primer (adhesion promoter) based on silanes (about 0.2-0.3 g/m²) and directly a wet-on-wet finish with a paint based on fluorinated resin (about 70-150 g/m²) were applied to the surface of the slab. Hot air at about 35-40°C was used in the flash step and at 60-70°C in the drying/hardening step. Finally the slab was cooled down to ambient temperature.

The result of the tests may be summarised as follows:
- Resistance to UV rays (in accordance with the test procedure Q-UV-313): above 4,000 hours
- Cross-cut paint adhesion test (in accordance with ISO 2409) : score 1 - separation of small paint flakes only at the intersection of the cuts
- Chemical resistance to acids: no variation
- Chemical resistance to organic solvents: no variation
- Stain test using an indelible marker: no variation

## Claims

1. Method for imparting UV rays resistance to articles of conglomerate stone material bonded with a synthetic resin and provided with a protective and/or decorative surface coating consisting of synthetic resin, **characterized in that**, prior to application of the said coating, a Corona discharge treatment is performed on the surfaces to be coated, which increases their surface tension to a value higher than that of the material forming the coating to be applied.

2. Method according to Claim 1, **characterized in that** said Corona discharge treatment is performed at a voltage of 30 kV and a frequency of 32 kHz, with a power of 8 kW.

3. Method according to Claim 1, **characterized in that** the synthetic resin of the surface coating is a fluoropolymer.

4. Method according to Claim 3, **characterized in that** said fluoropolymer is a fluorinated polyurethane resin.

5. Method according to Claim 4, **characterized in that** said fluorinated polyurethane resin contains at least 25% fluorine and 15% chlorine.

6. Method according to Claim 1, **characterized in that** the synthetic resin bonded to the conglomerate stone material is an epoxy resin or a polyester resin.

7. Article of conglomerate stone material bonded with a synthetic resin and provided with a protective and/or decorative surface coating comprising a synthetic resin, which can be obtained by the method of each of the preceding claims, either individually or in combination.

## Patentansprüche

1. Verfahren, mit dem Gegenstände aus konglomeriertem Gesteinsmaterial, die durch ein synthetisches Harz miteinander verbunden sind und mit einer schützenden und/oder dekorativen Oberflächenbeschichtung, bestehend aus synthetischem Harz, versehen sind, UV-Strahlungsresistenz verliehen wird, **dadurch gekennzeichnet, dass** vor dem Auftragen dieser Beschichtung eine Coronaentladungsbehandlung auf den zu beschichtenden Oberflächen vorgenommen wird, die deren Oberflächenspannung auf einen Wert erhöht, der höher als der des Materials ist, das als Beschichtung aufgetragen wird.

2. Verfahren nach Anspruch 1, **dadurch gekennzeichnet, dass** die Corona-Entladungsbehandlung bei einer Spannung von 30 kV und einer Frequenz von 32 kHz mit einer Leistung von 8 kW vorgenommen wird.

3. Verfahren nach Anspruch 1, **dadurch gekennzeichnet, dass** das synthetische Harz der Oberflächenbeschichtung ein Fluorpolymer ist.

4. Verfahren nach Anspruch 3, **dadurch gekennzeichnet, dass** das Fluorpolymer ein fluoriertes Polyurethanharz ist.

5. Verfahren nach Anspruch 4, **dadurch gekennzeichnet, dass** das fluorierte Polyurethanharz mindestens 25% Fluor und 15% Chlor enthält.

6. Verfahren nach Anspruch 1, **dadurch gekennzeichnet, dass** das synthetische Harz, das mit dem konglomerierten Gesteinsmaterial verbunden ist, ein Epoxidharz oder Polyesterharz ist.

7. Gegenstand aus konglomeriertem Gesteinsmaterial, das mit einem synthetischen Harz gebunden und mit einer schützenden und/oder dekorativen Oberflächenbeschichtung versehen ist, ein synthetisches Harz enthält, welches durch ein Verfahren aus jedem der vorangegangenen Ansprüche, entweder einzeln oder in Kombination, hergestellt werden kann.

## Revendications

1. Procédé permettant de conférer une résistance aux rayons UV à des articles en pierre conglomérée reliés à l'aide d'une résine synthétique et comportant un revêtement de surface protecteur et/ou décoratif constitué d'une résine synthétique, **caractérisé en ce que**, avant l'application dudit revêtement, un traitement par décharge Corona est réalisé sur les surfaces à revêtir, qui augmente leur tension de surface à une valeur supérieure à celle du matériau constituant le revêtement à appliquer.

2. Procédé selon la revendication 1, **caractérisé en ce que** ledit traitement par décharge Corona est réalisé à une tension de 30 kV et une fréquence de 32 kHz, avec une puissance de 8 kW.

3. Procédé selon la revendication 1, **caractérisé en ce que** la résine synthétique du revêtement de surface est un fluoropolymère.

4. Procédé selon la revendication 3, **caractérisé en ce que** ledit fluoropolymère est une résine en polyuréthane fluoré.

5. Procédé selon la revendication 4, **caractérisé en ce que** ladite résine en polyuréthane fluoré contient au moins 25 % de fluor et 15 % de chlore.

6. Procédé selon la revendication 1, **caractérisé en ce que** la résine synthétique reliée à la pierre conglomérée est une résine époxy ou une résine polyester.

7. Article en pierre conglomérée relié à l'aide d'une résine synthétique et comportant un revêtement de surface protecteur et/ou décoratif comprenant une résine synthétique, qui peut être obtenu par le procédé selon chacune des revendications précédentes, soit individuellement soit en combinaison.
